# DEMANDE DE BREVET EUROPEEN

(11) **EP 2 809 030 A2**
(43) Date de publication de la demande: **03.12.2014**
(21) Numéro de dépôt: 14154203.5
(22) Date de dépôt: 05.02.2007
(51) Int. Cl.: H04L 9/32

(54) **Procédé et dispositif d'authentification**

(30) Priorité: 03.02.2006 FR 0601004; 24.02.2006 FR 0601625; 27.02.2006 FR 0601739
(62) Demande divisionnaire de: 07730922.7
(71) Demandeur: Advanced Track And Trace, 92500 Rueil-Malmaison (FR)
(72) Inventeur: Massicot, Jean-Pierre, 92500 Rueil-Malmaison (FR); Foucou, Alain, 92500 Rueil-Malmaison (FR); Sagan, Zbigniew, 92500 Rueil-Malmaison (FR)
(74) Mandataire: Cornuejols, Georges

(57) **Abrégé**

Le procédé d'authentification comporte :
- une étape (510) de report d'une matrice holographique sur un support et
- une étape (520) de marquage de la matrice holographique par tir laser, pour former un code numérique non interprétable à l'oeil humain, maintenant les propriétés optiques de diffraction de la matrice holographique, le code numérique formé sur le support possédant une dimension d'impression adaptée à permettre la détection d'une copie d'un document réalisé à partir de la matrice holographique.

Dans des modes de réalisation, au cours de l'étape de marquage, l'impact de chaque tir laser présente une plus grande dimension et une profondeur permettant de maintenir les propriétés optiques de diffraction de l'hologramme.

Dans des modes de réalisation, au cours de l'étape de marquage, le tir laser est adapté à réaliser une marque de profondeur inférieure à deux microns.

## Description

La présente invention concerne un procédé et un dispositif d'authentification. Elle s'applique, en particulier, à la protection contre la contrefaçon des marques, des signes distinctifs et des produits les portant.

On connaît des systèmes de marquage de produits, par exemple avec des imprimantes à jet d'encre placées sur les lignes de production pour imprimer un numéro de série sur chaque article. D'autres systèmes mettent en oeuvre des codes.

Ces systèmes sont néanmoins fragiles et les contrefacteurs falsifient ces codes ou en déterminent le fonctionnement, ce qui leur permet de générer des codes semblant authentifier les produits contrefaits.

La présente invention vise à remédier à ces inconvénients. A cet effet, la présente invention vise, selon un premier aspect, un procédé d'authentification, caractérisé en ce qu'il comporte :
- une étape de génération d'un nombre aléatoire,
- une étape de génération d'un horodatage,
- une étape de génération d'une première clé secrète,
- une étape de troncature de code d'authentification de message mettant en oeuvre ladite première clé secrète,
- une étape d'encryption symétrique du nombre aléatoire, de l'horodatage et de la troncature, en mettant en oeuvre une deuxième clé secrète pour produire un code d'authentification.

Grâce à ces dispositions, de nombreuses informations peuvent être encryptées, y compris la date de création du code, un nombre aléatoire et une troncature. De plus, grâce à la connaissance de la deuxième clé secrète, on peut retrouver ces informations encryptées. Cependant, la première clé secrète est utile pour récupérer des informations d'authentification. Ainsi, chaque site de production met en oeuvre deux clés secrètes. En testant les différentes clés secrètes possibles sur un code, on peut ainsi déterminer l'origine de ce code et sa date de création.

Grâce à la mise en oeuvre de la présente invention, il n'est pas nécessaire de maintenir une base de données au niveau de la production, ce qui simplifie le fonctionnement de l'outil de production.

De plus, la détection de deux codes identiques permet de détecter immédiatement une falsification.

De plus, la troncature permet de conserver une taille raisonnable au code imprimé. Pour des raisons pratiques, la petite taille du code présente ainsi des avantages de compacité et d'esthétique.

Selon des caractéristiques particulières, au cours de l'étape de génération d'un nombre aléatoire, on met en oeuvre un générateur quantique.

Grâce à ces dispositions, le nombre aléatoire est vraiment aléatoire et non un nombre pseudo-aléatoire.

Selon des caractéristiques particulières, au cours de l'étape de troncature, on génère un authentifiant de message cryptographique en mettant en oeuvre la première clé secrète.

Selon des caractéristiques particulières, au cours de l'étape d'encryption symétrique du nombre aléatoire, de l'horodatage et de la troncature, en mettant en oeuvre la deuxième clé secrète, on produit, en outre, un condensât.

On observe qu'un condensât est aussi appelé « hash » ou, dans sa forme la plus simple « checksum », pour somme de vérification. Ce caractère de contrôle permet de vérifier de façon simple que le code est correctement saisi.

Selon des caractéristiques particulières, le procédé tel que succinctement exposé ci-dessus, comporte une étape de modification régulière de la première clé secrète et de transmission de la nouvelle clé secrète à un site de production.

Selon des caractéristiques particulières, au cours de l'étape d'encryption symétrique, on génère un code comportant des caractères alphanumériques.

Selon un deuxième aspect, la présente invention vise un dispositif d'authentification, caractérisé en ce qu'il comporte :
- un moyen de génération d'un nombre aléatoire,
- un moyen de génération d'un horodatage,
- un moyen de génération d'une première clé secrète,
- un moyen de troncature de code d'authentification de message mettant en oeuvre ladite première clé secrète,
- un moyen d'encryption symétrique du nombre aléatoire, de l'horodatage et de la troncature, en mettant en oeuvre une deuxième clé secrète pour produire un code d'authentification.

Les avantages, buts et caractéristiques du procédé et de ce dispositif étant similaires à ceux du procédé objet du premier aspect, ils ne sont pas rappelés ici.

La présente invention concerne aussi un procédé et un dispositif d'authentification. Elle s'applique, en particulier au marquage de document avec des hologrammes comportant de l'information permettant la détection de copies, à la sécurisation de documents par gestion de droits de propriété intellectuelle et à la lutte contre la contrefaçon.

On connaît de nombreuses méthodes dans le domaine de la gestion de droits numériques, connues sous le nom de DRM (acronyme de Digital Right Management pour gestion de droits numérique). Ces méthodes s'appliquent généralement aux logiciels et aux oeuvres multimédias et visent à interdire ou à limiter la possibilité de copie d'une oeuvre ou d'un logiciel. Ces méthodes présentent l'inconvénient d'être complexes à mettre en oeuvre. De plus, elles ne s'appliquent pas à la protection de documents imprimés.

La présente invention vise à remédier à ces inconvénients.

A cet effet, la présente invention vise, selon un troisième aspect, un procédé d'authentification, caractérisé en ce qu'il comporte :
- une étape de report d'une matrice holographique sur un support,
- une étape de marquage de ladite matrice holographique par tir laser, pour former un code numérique non interprétable à l'oeil humain, maintenant les propriétés optiques de diffraction de la matrice holographique, et adapté à permettre la détection d'une copie d'un document réalisé à partir de ladite matrice holographique.

Grâce à ces dispositions, les fonctions de protection du code numérique se combinent à celles de l'hologramme sans détruire les propriétés optiques de diffraction permettant la visualisation de l'hologramme.

Selon des caractéristiques particulières, au cours de l'étape de marquage, l'impact de chaque tir laser présente une plus grande dimension et une profondeur permettant de maintenir les propriétés optiques de diffraction de l'hologramme.

Selon des caractéristiques particulières, le procédé tel que succinctement exposé ci-dessus comporte une étape de détermination du code numérique pour que ce code numérique soit représentatif d'une identification d'un produit associé à l'hologramme représenté par la matrice holographique.

Selon des caractéristiques particulières, au cours de l'étape de marquage, on forme une pluralité de codes numériques différents associés, chacun, à une matrice holographique identique.

Grâce à ces dispositions, les différents produits réalisés à partir des matrices holographiques identiques associées à des codes numériques différents sont différents et donc permettent une meilleure traçabilité.

Selon des caractéristiques particulières, au cours de l'étape de marquage, on positionne les codes numériques, par rapport aux matrices holographiques correspondantes, en différentes positions.

Selon des caractéristiques particulières, au cours de l'étape de marquage, la position relative du code numérique et de la matrice holographique est fonction d'une information représentée par ledit code numérique.

Selon des caractéristiques particulières, le procédé tel que succinctement exposé ci-dessus comporte une étape de détermination d'un code additionnel et une étape d'impression dudit code additionnel sur un document formé à partir de ladite matrice holographique.

Selon un quatrième aspect, la présente invention vise un dispositif d'authentification, caractérisé en ce qu'il comporte :
- un moyen de report d'une matrice holographique sur un support,
- un moyen de marquage de ladite matrice holographique par tir laser, pour former un code numérique non interprétable à l'oeil humain, maintenant les propriétés optiques de diffraction de la matrice holographique, et adapté à permettre la détection d'une copie d'un document réalisé à partir de ladite matrice holographique.

Les avantages, buts et caractéristiques particulières de ce dispositif étant similaires à ceux du procédé objet du troisième aspect, tel que succinctement exposé ci-dessus, ils ne sont pas rappelés ici.

La présente invention concerne aussi un procédé et un dispositif d'authentification de pièces moulées. Elle s'applique, en particulier au marquage de moules et de pièces moulées avec de l'information permettant la détection de copies et à la lutte contre la contrefaçon.

On connaît de nombreuses méthodes dans le domaine de la gestion de droits numériques, connues sous le nom de DRM (acronyme de Digital Right Management pour gestion de droits numérique). Ces méthodes s'appliquent généralement aux logiciels et aux oeuvres multimédias et visent à interdire ou à limiter la possibilité de copie d'une oeuvre ou d'un logiciel. Ces méthodes présentent l'inconvénient d'être complexes à mettre en oeuvre. De plus, elles ne s'appliquent pas à la protection de documents imprimés.

La présente invention vise à remédier à ces inconvénients.

A cet effet, la présente invention vise, selon un cinquième aspect, un procédé d'authentification, caractérisé en ce qu'il comporte :
- une étape de réalisation d'un moule,
- une étape de marquage dudit moule par tir laser, pour former un code numérique non interprétable à l'oeil humain adapté à permettre la détection de copie du moule réalisée à partir de pièces moulées avec ledit moule, ou de pièces moulées réalisées à partir dudit moule copié.

Grâce à ces dispositions, les fonctions de protection du code numérique se combinent à celles du moule sans modifier sensiblement la pièce moulée.

Selon des caractéristiques particulières, le procédé tel que succinctement exposé ci-dessus comporte une étape de détermination du code numérique pour que ce code numérique soit représentatif d'une identification du moule ou des pièces moulées avec ledit moule.

Selon des caractéristiques particulières, le procédé tel que succinctement exposé ci-dessus comporte une étape de détermination d'un code additionnel et une étape d'impression dudit code additionnel sur une pièce moulée avec ledit moule.

Selon un sixième aspect, la présente invention vise un dispositif d'authentification, caractérisé en ce qu'il comporte :
- un moyen de réalisation d'un moule et
- un moyen de marquage dudit moule, par tir laser, pour former un code numérique non interprétable à l'oeil humain adapté à permettre la détection de copie du moule réalisée à partir de pièces moulées avec ledit moule, ou de pièces moulées réalisées à partir dudit moule copié.

Les avantages, buts et caractéristiques particulières de ce dispositif étant similaires à ceux du procédé objet du cinquième aspect, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés dans lesquels :
- la figure 1 représente, sous forme d'un schéma fonctionnel, les fonctions et étapes mises en oeuvre dans un mode de réalisation particulier du procédé objet du premier aspect de la présente invention pour générer un code d'authentification,
- la figure 2 représente, sous forme d'un schéma fonctionnel, les fonctions et étapes mises en oeuvre pour vérifier l'authenticité d'un code d'authentification, selon les premier et deuxième aspects de la présente invention,
- la figure 3 représente, schématiquement, un mode de réalisation particulier d'un dispositif objet du quatrième aspect de la présente invention,
- la figure 4 représente, schématiquement et en coupe, une matrice holographique marquée par le dispositif illustré en figure 3,
- la figure 5 représente, sous forme d'un logigramme, des étapes mises en oeuvre dans un mode de réalisation particulier du procédé objet du troisième aspect de la présente invention,
- la figure 6 représente, schématiquement, un mode de réalisation particulier d'un dispositif objet du sixième aspect de la présente invention,
- la figure 7 représente, schématiquement et en coupe, un moule marqué par le dispositif illustré en figure 6 et
- la figure 8 représente, sous forme d'un logigramme, des étapes mises en oeuvre dans un mode de réalisation particulier du procédé objet du cinquième aspect de la présente invention.

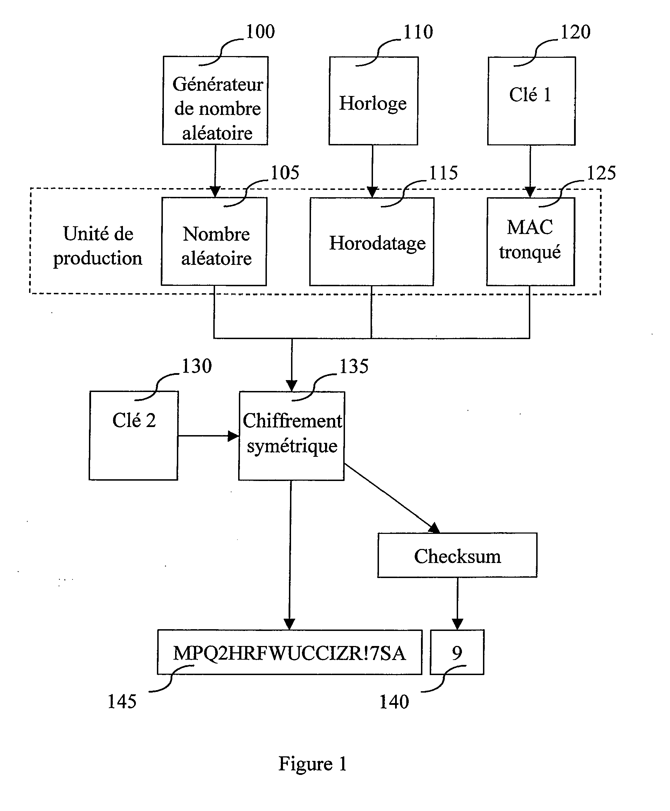

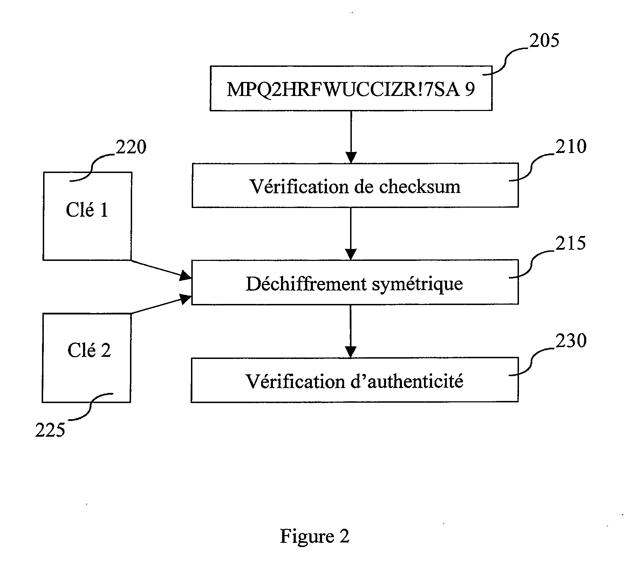

Dans toute la description des premier et deuxième aspects (figures 1 et 2), on utilise indifféremment les termes de chiffrage ou d'encryption, ces fonctions consistant à encrypter des données en mettant en oeuvre une clé d'encryption.

On observe, en figure 1, un moyen de génération de nombres aléatoires 100 réalisant la fonction de génération de nombres aléatoires 105, une clé matérielle 110 réalisant la fonction de fourniture d'horodatage 115, une mémoire de conservation d'une première clé secrète 120, une fonction de troncature de code d'authentification de message 125, une mémoire de conservation d'une deuxième clé secrète 130, une fonction d'encryption symétrique 135, une sortie de condensât 140 et une sortie de code d'authentification 145.

Le moyen de génération de nombres aléatoires 100 fournit, pour chaque processus de génération d'un code d'authentification et du condensât associé, un nombre aléatoire 105 différent. Préférentiellement, ce moyen de génération de nombres aléatoires comporte un générateur quantique pour que ces nombres ne soient pas pseudo-aléatoires, ce qui nuirait à la sécurité du processus.

La clé matérielle 110 est, par exemple une clé enfichable dans un port USB. Elle conserve une horloge qui ne peut être modifiée par des interactions avec cette clé. Les horodatage fournis par la clé matérielle 110 représentent la date, l'heure, la minute et la seconde à laquelle cet horodatage est fourni.

La mémoire de conservation d'une première clé secrète 120 peut être portable, par exemple sous la forme d'une clé enfichable dans le port d'un ordinateur ou accessible uniquement sur un serveur sécurisé et fourni sur requête après identification de l'émetteur de la requête.

La fonction de troncature de code d'authentification de message 125. Pour la mise en oeuvre de cette fonction de troncature, connue de l'homme du métier, le lecteur pourra se référer au document « http://csrc.nist.gov/publications/fips/fips198/fips-198a.pdf ». Avec cette fonction, un authentifiant de message cryptographique est généré selon le standard cryptographique « Keyed-Hash Message Authentication Code » (en français code d'authentification de condensât avec clé) en mettant en oeuvre la première clé secrète. Cette signature est tronqué conformément au standard afin d'en limiter la taille.

On observe que la troncature permet de conserver une taille raisonnable au code imprimé. Pour des raisons pratiques, la petite taille du code présente ainsi des avantages de compacité et d'esthétique.

La mémoire de conservation de la deuxième clé secrète 130 peut, elle aussi, être portable ou accessible uniquement sur un serveur sécurisé.

La fonction d'encryption symétrique 135 met en oeuvre un algorithme de chiffrement symétrique (par exemple, les algorithmes connus sous les noms de Rijndael,DES, TripleDES, RC5, marques déposées) peut être utilisé à cette étape. L'algorithme Blowfish

(marque déposée) présente les avantages d'être rapide, gratuit et considéré comme robuste. En ce qui concerne Blowfish, le lecteur pourra se référer au document http://www.schneier.com/paper-blowfish-fse.html.

La fonction d'encryption symétrique génère un code comportant des caractères alphanumériques et un condensât. On rappelle qu'un condensât est aussi appelé « hash » ou, dans sa forme la plus simple « checksum », pour somme de vérification. La sortie de condensât 140 et la sortie de code d'authentification 145 permettent d'associer le code d'authentification et le condensât à un produit afin qu'ils deviennent solidaires et permettent l'authentification du produit. Par exemple, ces sorties 140 et 145 sont reliéee à une imprimante à jet d'encre qui les imprime sur le produit, son étiquette ou son emballage. Les grands nombres utilisés dans le procédé de génération de code d'authentification garantissent que la détection de deux codes identiques permet de détecter immédiatement une falsification du produit protégé par ce code d'authentification.

Préférentiellement, le propriétaire des droits de propriété intellectuelle ou industrielle liés à des produits maîtrise la fourniture, à chacun des sites de production de ces produits, des deux clés mises en oeuvre dans le processus de génération de codes d'authentification. Il peut donc décider de la fréquence de changement de ces clés secrètes.

Préférentiellement, le procédé de génération de codes d'authentification comporte une étape de modification régulière et automatique de la première clé secrète de chaque site de production, chaque nouvelle première clé secrète étant immédiatement transmise au site de production concerné.

Comme on le voit, à la lecture de la description de la figure 1, le procédé d'authentification objet de la présente invention comporte :
- une étape de génération d'un nombre aléatoire,
- une étape de génération d'un horodatage,
- une étape de génération d'une première clé secrète,
- une étape de troncature de code d'authentification de message mettant en oeuvre ladite première clé secrète,
- une étape d'encryption symétrique du nombre aléatoire, de l'horodatage et de la troncature, en mettant en oeuvre une deuxième clé secrète pour produire un code d'authentification.

Ainsi, de nombreuses informations peuvent être encryptées, y compris la date de création du code, un nombre aléatoire et une troncature. De plus, grâce à la connaissance de la deuxième clé secrète, on peut retrouver ces informations encryptées. Cependant, la première clé secrète est utile pour récupérer des informations d'authentification. Ainsi, chaque site de production met en oeuvre deux clés secrètes. En testant les différentes clés secrètes possibles sur un code, on peut ainsi déterminer l'origine de ce code et sa date de création.

On comprend aussi que la mise en oeuvre de la présente invention permet d'éviter d'avoir à maintenir une base de données des codes d'authentification générés, ce qui simplifie le fonctionnement de l'outil de production.

On observe, en figure 2, une entrée 205 d'un code d'authentification et d'un condensât, une fonction de vérification de condensât 210, une fonction de décryption symétrique 215 mettant en oeuvre deux clés de décryption 220 et 225 et une fonction de vérification d'authenticité 230.

En ce qui concerne la vérification de code d'authentification, le mode de réalisation particulier du procédé objet de la présente invention met en oeuvre deux niveaux de vérifications :
a) une vérification de l'intégrité du message : en utilisant toutes les paires de clés cryptographiques (clés secrètes 1 et 2) connues, on vérifie que le message est intègre. Cette intégrité est vérifiée par comparaison de la signature (HMAC) calculée après décryptage du chiffrement symétrique et de la signature du token,
b) une vérification de cohérence du message : une fois vérifiée l'intégrité, on s'assure que le message est structurellement cohérent. En effet, un générateur de code dérobé à son propriétaire continue à générer des codes intègres. Cependant la date contenue dans le code permet de distinguer les tokens valides (avant la date du vol) des codes incohérents (après la date du vol). La vérification de la cohérence est donc obtenue en comparant les trois éléments suivants : numéro du générateur (site) ; date du code ; clés cryptographiques validée à l'étape de vérification d'intégrité, au référentiel des données générés sur les clés USB.

Le code dont il est question dans ce document est destiné à être marqué ou imprimé en clair sur les produits. En variante, le consommateur qui souhaite s'informer sur un produit en sa possession peut utiliser un site web ou un centre d'appel équipé pour vérifier l'intégrité et la cohérence du code. Cette consultation fournit une présomption de contrefaçon dans les cas suivants :
- le code n'est pas intègre ou est incohérent ou
- le code à déjà été vérifié.

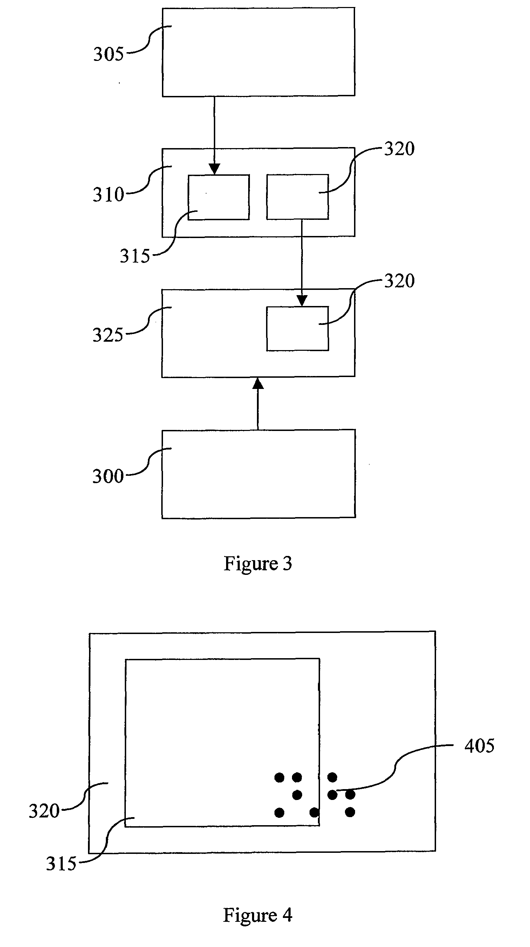

En ce qui concerne les troisième et quatrième aspects de la présente invention, on observe, en figure 3, un moyen de détermination d'un code numérique 300, un moyen de conception graphique 305, un moyen 310 de report d'une matrice holographique 315 sur un support 320 et un moyen de marquage 325.

Le moyen de détermination de code numérique 300 est de type connu. Il est adapté à déterminer un code numérique présentant au moins les fonctions suivantes :
- d'une part, représenter une information identifiant un produit, une date de fabrication, un fabricant, un propriétaire de droits, un ordre de fabrication et/ou un lieu de fabrication, par exemple, de manière suffisamment robuste pour que, même si ce code numérique est détériorer, par exemple par copie, au moins une partie de l'information qu'il représente reste accessible et
- d'autre part, permettre de détecter toute copie de ce code numérique avec des moyens de scannerisation et d'impression de type connu.

Pour réaliser la première fonction indiquée ci-dessus, le code numérique peut comporter des rédondances et/ou des codes de correction d'erreur, connus sous le nom de « checksum » (pour somme de vérification) ou de « CRC » (pour code redondant de vérification). Pour réaliser la deuxième fonction l'entroprie du code et/ou la dimension de son impression sont adaptés, selon des techniques connues en matière de codes anti-copie. Le code numérique est transmis par le moyen de détermination de code numérique au moyen de marquage 325.

Le moyen de conception graphique 305 est de type connu. Il permet de définir chaque élément graphique d'une matrice holographique 315 destinée à être reportée, par le moyen de report 310, sur le support 320 en vue d'imprimer des hologrammes sur des documents imprimés.

Le moyen de report 310 est de type connu. Le support 320 est, généralement, en nickel.

Le moyen de marquage 325 est adapté à effectuer des tirs laser sur le support 320, une fois que celui-ci présente la matrice holographique, en des points définis par le code numérique. Par exemple, le code numérique prend la forme d'une matrice de points pouvant prendre deux valeurs, l'une de ces valeurs étant associée à un tir laser et l'autre n'y étant pas associée. Le moyen de marquage 325 est préférentiellement adapté à effectuer des tirs laser dont l'impact possède un diamètre et une profondeur permettant de maintenir les propriété optique de diffraction de l'hologramme.

On observe, en figure 4, le support 320 portant la matrice holographique 315 et des impacts de tir laser 405. Chaque impact 405 présente une plus grande dimension et une profondeur maintenant les propriétés optiques de diffraction de l'hologramme réalisé à partir de la matrice holographique. On observe que les impacts 405 peuvent se trouver sur la matrice holographique 315 ou en dehors de celle-ci. Du fait des dimensions respectives cités ci-dessus, les impacts 405 et la matrice holographique 315 ne sont pas, en figure 4, à l'échelle.

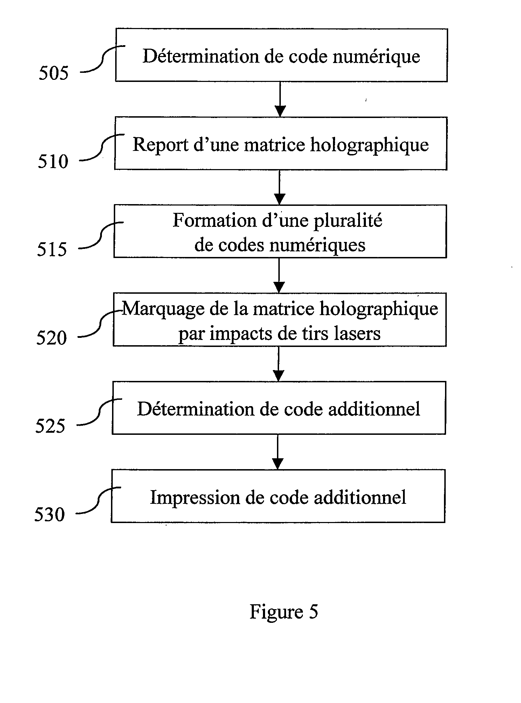

On observe, en figure 5, que le procédé d'authentification comporte, d'abord, une étape 505 de détermination du code numérique pour que ce code numérique soit représentatif d'une identification d'un produit associé à l'hologramme représenté par la matrice holographique.

Puis, au cours d'une étape 510 de report, on reporte une matrice holographique sur un support.

Au cours d'une étape 515, on forme une pluralité de codes numériques différents associés, chacun, à une matrice holographique identique et les positions des codes numériques pour que les codes numériques se retrouvent, par rapport aux matrices holographiques correspondantes, en différentes positions, positions fonction d'une information représentée par ledit code numérique.

Au cours d'une étape 520 de marquage, on marque ladite matrice holographique par tir laser, pour former le code numérique non interprétable à l'oeil humain, maintenant les propriétés optiques de diffraction de la matrice holographique, et adapté à permettre la détection d'une copie d'un document réalisé à partir de ladite matrice holographique.

Au cours de l'étape 520 de marquage, l'impact de chaque tir laser présente une plus grande dimension et une profondeur permettant de maintenir les propriétés optiques de diffraction de l'hologramme.

Au cours d'une étape 525, on détermine un code additionnel et, au cours d'une étape 530, on imprime ledit code additionnel sur un document formé à partir de ladite matrice holographique.

Ainsi, par la mise en oeuvre du procédé objet de la présente invention, les fonctions de protection du code numérique se combinent à celles de l'hologramme sans détruire les propriétés optiques de diffraction permettant la visualisation de l'hologramme.

Les différents produits réalisés à partir des matrices holographiques identiques associées à des codes numériques différents sont différents et donc permettent une meilleure traçabilité.

La conservation des optiques de diffraction a pour avantage que la marque reste inaperçue.

En ce qui concerne le code additionnel évoqué aux étapes 525 et 530, ils peuvent être rendus invulnérables au décodage. Par exemple, ces codes mettent en oeuvre des bi-clés conformes à l'infrastructure à clés publiques PKI (pour public key infrastructure). Ces codes sont fournis, à la demande, aux serveurs de titulaires des droits abonnés.

Préférentiellement, ces codes additionnels représentent un premier contenu, par exemple, un code peut représenter le nom du titulaire des droits, une référence de produit à marquer et/ou une date de génération du code et sont, éventuellement uniques, c'est-à-dire affecter à un seul produit ou document imprimé.

Préférentiellement, les codes additionnels comportent des codes de correction d'erreur, par exemple de type connu sous le nom de « CRC ».

Pour imprimer chaque code additionnel, on génère, à partir du code additionnel, des marques représentatives de ce code additionnel et, préférentiellement, d'une clé spécifiquement attribuée au produit dans ledit ensemble de produits, la marque représentative étant, en conséquence, différente pour chaque produit dudit ensemble.

On observe que la marque peut prendre plusieurs formes. Selon un premier exemple, la marque est un code à barres associé au produit. Selon un deuxième exemple, la marque est un ensemble de caractères alphanumériques associé au produit. Selon un troisième exemple, la marque est un code à barres en au moins deux dimensions ou une matrice de données, connue sous le nom de datamatrix, associé au produit.

La marque représentative du code additionnel peut être imprimé par une imprimante à jet d'encre ou peut être formé, dans la matière du produit ou de l'emballage, par impact d'un faisceau laser ou imprimé par transfert thermique.

Dans des modes de réalisation particuliers, on effectue la lecture, par exemple par l'intermédiaire d'une caméra, des impacts lasers et, en fonction de l'information lue, on modifie, par exemple par codage, le code additionnel associé au produit. En variante, la marque est rendue invisible par le choix d'un procédé de fabrication particulier, par exemple modifiant localement le coefficient de réflexion de l'étiquette ou de l'emballage ou mettant en oeuvre une encre invisible de type connu.

En variante, la marque est copiée en plusieurs parties de l'emballage.

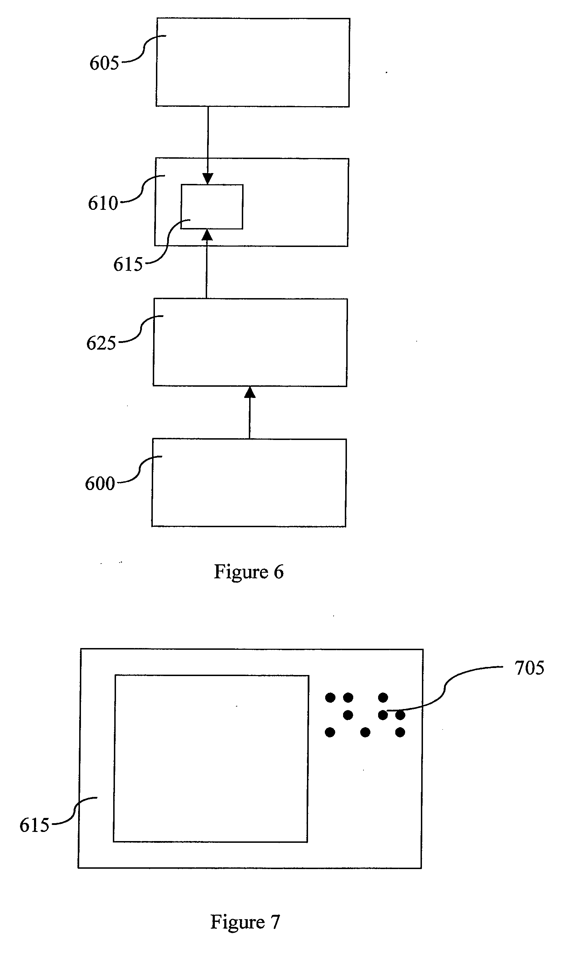

En ce qui concerne les cinquième et sixième aspects de la présente invention on observe, en figure 6, un moyen de détermination d'un code numérique 600, un moyen de conception de moule 605, un moyen 610 de fabrication d'un moule 615 et un moyen de marquage 625.

Le moyen de détermination de code numérique 600 est de type connu. Il est adapté à déterminer un code numérique présentant au moins les fonctions suivantes :
- d'une part, représenter une information identifiant un produit, une date de fabrication, un fabricant, un propriétaire de droits, un ordre de fabrication et/ou un lieu de fabrication, par exemple, de manière suffisamment robuste pour que, même si ce code numérique est détériorer, par exemple par copie, au moins une partie de l'information qu'il représente reste accessible et
- d'autre part, permettre de détecter toute copie de ce code numérique avec des moyens de capture et de fabrication de type connu.

Pour réaliser la première fonction indiquée ci-dessus, le code numérique peut comporter des rédondances et/ou des codes de correction d'erreur, connus sous le nom de « checksum » (pour somme de vérification) ou de « CRC » (pour code redondant de vérification). Pour réaliser la deuxième fonction, l'entroprie du code et/ou la dimension de son marquage sont adaptés, selon des techniques connues en matière de codes anti-copie. Le code numérique est transmis par le moyen de détermination de code numérique au moyen de marquage 625.

Le moyen de conception de moule 605 est de type connu, par exemple de type ordinateur doté d'un logiciel de conception assistée par ordinateur. Il permet de définir chaque élément d'un moule 615 destinée à être fabriqué, par le moyen de fabrication 610, en vue de mouler des pièces, par exemple en matière plastique.

Le moyen de fabrication 610 est de type connu.

Le moyen de marquage 625 est adapté à effectuer des tirs laser sur le moule 615, une fois que celui-ci est fabriqué ou sur le matériau servant à la réalisation de ce moule 615, en des points définis par le code numérique. Par exemple, le code numérique prend la forme d'une matrice de points pouvant prendre deux valeurs, l'une de ces valeurs étant associée à un tir laser et l'autre n'y étant pas associée. Le moyen de marquage 625 est préférentiellement adapté à effectuer des tirs laser dont l'impact possède un diamètre et une profondeur permettant de détecter une copie du moule réalisée à partir d'une pièce moulée avec le moule 615 et des pièces moulées à partir de cette copie de moule.

On observe, en figure 7, le moule 615 et des impacts de tir laser 705. On observe que les impacts 705 peuvent se trouver sur une partie plane ou courbée du moule 615. Du fait des dimensions respectives, les impacts 705 et le moule 615 ne sont pas, en figure 7, à l'échelle.

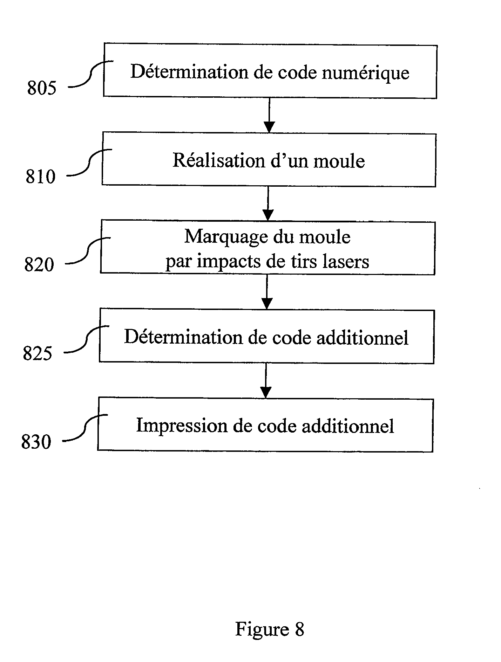

On observe, en figure 8, que le procédé d'authentification comporte, d'abord, une étape 805 de détermination du code numérique pour que ce code numérique soit représentatif d'une identification du moule 615 ou des pièces moulées à partir de ce moule 615.

Puis, au cours d'une étape 810 de fabrication, on fabrique le moule 615.

Au cours d'une étape 820 de marquage, on marque le moule 615 par tir laser, pour former le code numérique non interprétable à l'oeil humain, et adapté à permettre la détection d'une copie du moule réalisé à partir d'une pièce moulée avec le moule 615 ou d'un pièce moulée à partir de ladite copie.

Au cours d'une étape 825, on détermine un code additionnel et, au cours d'une étape 830, on imprime ledit code additionnel sur une pièce moulée formée avec ledit moule 615.

Ainsi, par la mise en oeuvre du procédé objet de la présente invention, les fonctions de protection du code numérique se combinent à celles du moule sans modifier sensiblement les pièces moulées.

Les différents produits réalisés à partir du moule permettent donc une meilleure traçabilité et la détection de copies et de contrefaçons.

En ce qui concerne le code additionnel évoqué à l'étape 825, ils peuvent être rendus invulnérables au décodage. Par exemple, ces codes mettent en oeuvre des bi-clés conformes à l'infrastructure à clés publiques PKI (pour public key infrastructure). Ces codes sont fournis, à la demande, aux serveurs de titulaires des droits abonnés.

Préférentiellement, ces codes additionnels représentent un premier contenu, par exemple, un code peut représenter le nom du titulaire des droits, une référence de produit à marquer et/ou une date de génération du code et sont, éventuellement uniques, c'est-à-dire affecter à un seul produit ou document imprimé.

Préférentiellement, les codes additionnels comportent des codes de correction d'erreur, par exemple de type connu sous le nom de « CRC ».

Pour imprimer chaque code additionnel, on génère, à partir du code additionnel, des marques représentatives de ce code additionnel et, préférentiellement, d'une clé spécifiquement attribuée au produit dans ledit ensemble de produits, la marque représentative étant, en conséquence, différente pour chaque produit dudit ensemble.

On observe que la marque imprimée peut prendre plusieurs formes. Selon un premier exemple, la marque est un code à barres associé au produit. Selon un deuxième exemple, la marque est un ensemble de caractères alphanumériques associé au produit. Selon un troisième exemple, la marque est un code à barres en au moins deux dimensions ou une matrice de données, connue sous le nom de datamatrix, associé au produit.

La marque imprimée représentative du code additionnel peut être imprimé par une imprimante à jet d'encre ou peut être formé, dans la matière du produit ou de l'emballage, par impact d'un faisceau laser ou imprimé par transfert thermique.

Dans des modes de réalisation particuliers, on effectue la lecture, par exemple par l'intermédiaire d'une caméra, des impacts lasers et, en fonction de l'information lue, on modifie, par exemple par codage, le code additionnel associé au produit. En variante, la marque imprimée est rendue invisible par le choix d'un procédé de fabrication particulier, par exemple modifiant localement le coefficient de réflexion de l'étiquette ou de l'emballage ou mettant en oeuvre une encre invisible de type connu.

En variante, la marque imprimée est copiée en plusieurs parties de l'emballage.

## Revendications

1. Procédé d'authentification, **caractérisé en ce qu'**il comporte :
- une étape (510) de report d'une matrice holographique sur un support et
- une étape (520) de marquage de ladite matrice holographique par tir laser, pour former un code numérique non interprétable à l'oeil humain, maintenant les propriétés optiques de diffraction de la matrice holographique, le code numérique formé sur le support possédant une dimension d'impression adaptée à permettre la détection d'une copie d'un document réalisé à partir de ladite matrice holographique.

2. Procédé d'authentification selon la revendication 1, dans lequel, au cours de l'étape (520) de marquage, l'impact de chaque tir laser présente une plus grande dimension et une profondeur permettant de maintenir les propriétés optiques de diffraction de l'hologramme.

3. Procédé d'authentification selon l'une quelconque des revendications 1 ou 2, dans lequel, au cours de l'étape (520) de marquage, le tir laser est adapté à réaliser une marque de profondeur inférieure à deux microns.

4. Procédé d'authentification selon l'une quelconque des revendications 1 à 3, qui comporte une étape (505) de détermination du code numérique pour que ce code numérique soit représentatif d'une identification d'un produit associé à l'hologramme représenté par la matrice holographique.

5. Procédé d'authentification selon l'une quelconque des revendications 1 à 4, dans lequel, au cours de l'étape (520) de marquage, on forme une pluralité de codes numériques différents associés, chacun, à une matrice holographique identique.

6. Procédé d'authentification selon l'une quelconque des revendications 1 à 5, dans lequel, au cours de l'étape (520) de marquage, on positionne les codes numériques, par rapport aux matrices holographiques correspondantes, en différentes positions.

7. Procédé d'authentification selon l'une quelconque des revendications 1 à 6, dans lequel, au cours de l'étape (520) de marquage, la position relative du code numérique et de la matrice holographique est fonction d'une information représentée par ledit code numérique.

8. Procédé d'authentification selon l'une quelconque des revendications 1 à 7, qui comporte une étape (525) de détermination d'un code additionnel et une étape (530) d'impression d'une marque représentative dudit code additionnel sur le support de ladite matrice holographique.

9. Procédé selon la revendication 8, dans lequel le code additionnel comporte des codes de correction d'erreur, par exemple de type connu sous le nom de « CRC ».

10. Procédé selon l'une des revendications 8 ou 9, dans lequel, au cours de l'étape (530) d'impression, on génère, à partir du code additionnel, une marque représentative :
- de ce code additionnel et
- d'une clé spécifiquement attribuée au support dans un ensemble de supports ;
la marque représentative étant, en conséquence, différente pour chaque support dudit ensemble.

11. Procédé selon l'une des revendications 8 à 10, dans lequel marque représentative du code additionnel est un code à barres.

12. Procédé selon l'une des revendications 8 à 11, dans lequel, pour générer le code additionnel, on effectue la lecture, par exemple par l'intermédiaire d'une caméra, des impacts de tirs lasers sur le support et, en fonction de l'information lue, on génère le code additionnel associé au support.

13. Dispositif d'authentification, **caractérisé en ce qu'**il comporte :
- un moyen (310) de report d'une matrice holographique sur un support, et
- un moyen (325) de marquage de ladite matrice holographique par tir laser, pour former un code numérique non interprétable à l'oeil humain, maintenant les propriétés optiques de diffraction de la matrice holographique, le code numérique formé sur le support possédant une dimension d'impression adaptée à permettre la détection d'une copie d'un document réalisé à partir de ladite matrice holographique.

14. Dispositif d'authentification selon la revendication 13, dans lequel le moyen (325) de marquage est adapté à ce que l'impact de chaque tir laser présente une plus grande dimension et une profondeur permettant de maintenir les propriétés optiques de diffraction de l'hologramme.

15. Dispositif d'authentification selon l'une quelconque des revendications 13 ou 14, dans lequel le moyen (325) de marquage est adapté à ce que le tir laser réalise une marque de profondeur inférieure à deux microns.
